# EUROPÄISCHE PATENTSCHRIFT

(11) **EP 1 159 163 B1**
(45) Veröffentlichungstag und Bekanntmachung des Hinweises auf die Patenterteilung: **26.05.2004**
(21) Anmeldenummer: 00904961.0
(22) Anmeldetag: 20.01.2000
(51) Int. Cl.: B60R 21/16, B60R 21/01

(54) **SICHERHEITSVORRICHTUNG MIT EINER AIRBAGANORDNUNG AUS MEHREREN AIRBAGS FÜR EIN KRAFTFAHRZEUG**
SAFETY DEVICE WITH AN AIRBAG SYSTEM COMPRISING SEVERAL AIRBAGS FOR A MOTOR VEHICLE
DISPOSITIF DE SECURITE POUR UN ENSEMBLE AIRBAGS CONSTITUE DE PLUSIEURS AIRBAGS

(30) Priorität: 05.02.1999 DE 19904740
(43) Veröffentlichungstag der Anmeldung: 05.12.2001
(73) Patentinhaber: Volkswagen Aktiengesellschaft, 38436 Wolfsburg (DE)
(72) Erfinder: SINNHUBER, Ruprecht, D-38518 Gifhorn (DE); WOHLLEBE, Thomas, D-38110 Braunschweig (DE)
(74) Vertreter: Liebl, Thomas, Dipl.-Ing.
(86) Internationale Anmeldenummer: PCT/EP2000/000557
(87) Internationale Veröffentlichungsnummer: WO 2000/046075

(56) Entgegenhaltungen:
- EP-A- 0 796 771
- EP-A- 0 812 741
- WO-A-99/65737
- DE-A- 19 816 075
- DE-A- 19 816 080
- DE-U- 29 805 217
- GB-A- 2 289 786

## Beschreibung

Die Erfindung betrifft eine Sicherheitsvorrichtung mit einer Airbaganordnung für ein Kraftfahrzeug nach dem Oberbegriff des Anspruchs 1.

Sicherheitsvorrichtungen für ein Kraftfahrzeug mit Airbaganordnungen sind in unterschiedlichen Ausführungsformen allgemein bekannt. Insbesondere sind Airbaganordnungen mit mehreren Airbags im Front-, Seiten- und Kopfaufprallbereich von Insassen bekannt. Diese Airbags sind bei einem Fahrzeugaufprall in Abhängigkeit der Aufprallverzögerung und Aufprallrichtung über einen jeweils zugeordneten, aktivierbaren Gasgenerator aufblasbar, um einen Aufprall eines Insassen gedämpft abzufangen.

Ein Problem dieser Anordnungen besteht darin, dass von einem sich aufblasenden Airbag eine ungünstige Aggressivität gegenüber Insassen oder Gegenständen im Aufblasbereich ausgehen kann. Insbesondere treten diese Probleme auf bei Insassen außerhalb einer Normalposition (out of position; OOP), wie beispielsweise für ein Kind, das vor einem Sitz steht oder für einen Erwachsenen, der weit nach vorne gelehnt sitzt und für Gegenstände auf einem Sitz, wie beispielsweise einen dort angebrachten Kindersitz.

Es sind bereits Airbags in Verbindung mit Messanordnungen bekannt, um individuelle Gegebenheiten, insbesondere out-of-position-Situationen, bei der Aktivierung eines Airbags festzustellen und ggf. eine Airbagauslösung zu verhindern oder nur reduziert vorzunehmen. Dazu sind u. a. berührungslos arbeitende Abstandsmessanordnungen mit Infrarot- und/oder Ultraschallsensoren sowie Gewichtssensoren bekannt. Eine solche komplexe Innenraumsensorik ist aufwendig und teuer.

Einen Stand der Technik gemäß Art. 54(3) EPÜ stellt die DE 198 16 075 A1 dar. Konkret sind bei dieser Sicherheitsvorrichtung der Tastairbag und der Schutzairbag zusammen an einem Mehrkammer-Airbag ausgebildet. Der Tastairbag bildet dabei eine separate Airbagkammer des Mehrkammer-Airbags, die zeitlich vor der wenigstens einen weiteren Airbagkammer, die den Schutzairbag ausbildet, aufgeblasen werden kann. Durch dementsprechend am Mehrkammer-Airbag angebrachte Fangbänder wird beim Aufblasvorgang ein Teilwandbereich des Mehrkammer-Airbags zurückgehalten, so dass sich vorab der Tastairbag aufbläst. Nach Ausbildung des Tastairbags wird der Gasgenerator in Abhängigkeit der Tasterkennung des Tastairbags mit einem Steuersignal beaufschlagt oder nicht. Wird ein Steuersignal an den Gasgenerator geleitet, so wird dadurch die Entfaltung des Schutzairbags unterbunden bzw. der Schutzairbag wird nur in einem reduzierten Maße aufgeblasen. Liegt kein Steuersignal am Gasgenerator vor, so erfolgt im Mehrkammer-Airbag eine weitere Druckerhöhung mittels dem Gasgenerator, das zu einem Zerreißen der Fangbänder an vorgegebenen Sollbruchstellen führt, so dass damit die Entfaltung des Schutzairbags mit voller Energie freigegeben wird.

Des weiteren ist aus der EP 0 796 771 A1 ein Airbag bekannt, der eine Airbaghülle und einen Innenairbag umfasst. Der Innenairbag ist zeitlich vor der Airbaghülle aufblasbar und durch seine Gestalt für eine in Richtung auf den Insassen gezielte Gasbefüllung vorbereitet. Dafür weist der Innenairbag einen sich in Richtung auf den Insassen konstant verengenden Querschnitt auf, der den Gasstrom in Richtung auf den Insassen lenkt. Damit wird der Insasse durch den sich schneller entfaltenden Innenairbag frühzeitig abgefangen und kann frühzeitig an der Fahrzeugverzögerung teilnehmen, wodurch die Belastung des Insassen abgesenkt werden kann.

Aus der DE 298 05 217 U1 ist eine Sicherheitsvorrichtung für ein Fahrzeug bekannt, bei der ein Airbag ein Fangband im Inneren des Airbags aufweist, das so mit dem Airbag gekoppelt ist, dass die Gestalt des Airbags im entfalteten Zustand beeinflusst werden kann. Bei einer Aktivierung der Sicherheitseinrichtung und der damit beginnenden Entfaltung des Airbags wird von einem Sensor, der die Position des rückzuhaltenden Fahrzeuginsassen erfasst, ein Signal bezüglich der erfassten Insassenposition, beispielsweise eine Out-of-position-Situation, über eine Auswerteeinrichtung an eine Blockiereinrichtung abgegeben, mittels der eine weitere Längenzunahme des Fangbandes verhindert werden kann. Somit kann eine weitere Entfaltung des Airbags auf den Fahrzeuginsassen zu unterbunden werden, wodurch die Belastung des Fahrzeuginsassen reduziert werden kann.

Eine gattungsgemäße Sicherheitsvorrichtung mit einer Airbaganordnung für ein Kraftfahrzeug ist aus der EP 0 812 741 A1 bekannt. Die Airbaganordnung ist dabei über wenigstens einen bei einem Fahrzeugaufprall aktivierbaren Gasgenerator aufblasbar, wobei die Airbaganordnung eine Vorrichtung zur Tasterkennung aufweist zur Ertastung eines möglicherweise in einem Aufblasbereich vorhandenen Hindernisses, insbesondere zur Ertastung eines Insassen außerhalb einer Normalposition (out of position; OOP). Die Vorrichtung zur Tasterkennung gibt beim Auftreffen auf ein Hindernis ein Steuersignal ab. Dem wenigstens einen Gasgenerator ist eine Steuereinrichtung zur Steuerung und Beeinflussung der Airbaganordnung in Abhängigkeit von sensierten Positionsparametem zugeordnet, die mit der Vorrichtung zur Tasterkennung verbunden ist und die bei der Beaufschlagung mit einem Steuersignal der Vorrichtung zur Tasterkennung eine Aufblasfunktion des Gasgenerators für die Airbaganordnung unterbindet oder wenigstens reduziert und ohne Vorliegen eines Steuersignals der Vorrichtung zur Tasterkennung die Aufblasfunktion mit voller Energie (full power) freigibt,

Konkret ist bei dieser Sicherheitsvorrichtung ein einziger Airbag vorgesehen, bei dem die von einem Gasgenerator als Fülleinrichtung gelieferte Gasmenge durch einen ungehinderten Vorschub des Airbags in einen Fahrgastraum gesteuert ist. Der Airbag weist dabei ein mittleres Kissenteil auf, an dem jeweils seitlich ein seitliches Kissenteil angeordnet ist, wobei die beiden seitlichen Kissenteile weiter in den Fahrzeuginnenraum ragen als das mittlere Kissenteil. In jedem der drei Kissenteile ist als Vorrichtung zur Tasterkennung ein Abtastmedium ausgebildet, mittels dem die Vorschubgeschwindigkeit des jeweiligen Kissenteils erfasst werden kann. Das Abtastmedium ist hier durch eine Mehrzahl von Fäden oder Bändern ausgebildet und kann mit einer abtastbaren Codierung versehen sein. Ändert sich die Vorschubgeschwindigkeit der Fäden, ist dies ein Merkmal für ein Hindernis, so dass eine weitere Entfaltung des Airbags unterbunden wird. Ein derartiger Aufbau einer Sicherheitsvorrichtung mit einer Airbaganordnung ist relativ kompliziert, da eine Vielzahl von Maßnahmen, wie z. B. die Sensierung, die Form der Airbagteile, an einem einzigen Airbag vorgesehen werden müssen. Insbesondere der Aufwand für die Sensorik ist hier bei diesem Aufbau relativ aufwendig. Ferner weist eine derartige Sicherheitsvorrichtung auch eine hohe Störanfälligkeit auf, was wiederum die Funktionsfähigkeit der Sicherheitsvorrichtung insgesamt beeinträchtigt Des weiteren ist hier aufgrund der Komplexität des Aufbaus dieser Airbaganordnung der Herstellungsaufwand relativ hoch.

Aufgabe der Erfindung ist es, eine Sicherheitsvorrichtung für ein Kraftfahrzeug mit einer Airbaganordnung zu schaffen, bei der mit einfachen Mitteln ein gute Schutzwirkung für einen Fahrzeuginsassen bei relativ geringer Insassenbelastung, insbesondere in Out-of-position-Situationen, erzielbar ist.

Diese Aufgabe wird mit den Merkmalen des Anspruchs 1 gelöst.

Gemäß Anspruch 1 umfasst die Airbaganordnung wenigstens einen Tastairbag und wenigstens einen Schutzairbag, die voneinander getrennte Airbags sind. Der wenigstens eine, relativ kleinvolumige, fingerartig mit wenig Energie (low power) schnell aufblasbare Tastairbag ist mit Tastfunktion in den Aufblasbereich wenigstens eines zugeordneten, großvolumigeren Schutzairbags mit Abstützfunktion aufblasbar und/oder bewegbar und ertastet dort ein möglicherweise in diesem Aufblasbereich vorhandenes Hindernis, insbesondere einen Insassen außerhalb einer Normalposition (out of position; OOP). Mit dem Tastairbag ist die Vorrichtung zur Tasterkennung verbunden, die beim Auftreffen des Tastairbags auf ein Hindernis ein Steuersignal abgibt. Dem wenigstens einen Gasgenerator ist die Steuereinrichtung zur Steuerung und Beeinflussung des Schutzairbags in Abhängigkeit von sensierten Positionsparametem zugeordnet, die bei der Beaufschlagung mit einem Steuersignal der Vorrichtung zur Tasterkennung eine Aufblasfunktion des Gasgenerators für den dem Tastairbag zugeordneten wenigstens einen Schutzairbag unterbindet oder wenigstens reduziert und ohne Vorliegen eines Steuersignals der Vorrichtung zur Tasterkennung die Aufblasfunktion mit voller Energie (full power) für den wenigstens einen Schutzairbag freigibt.

Vorteilhaft erfolgt hier somit durch den Tastairbag vorab mit wenig Energie und wenig Aggressivität eine Sensierung von Positionsparametem im Aufblasbereich des mit voller Energie aufblasbaren Schutzairbags. Dadurch wird mit relativ wenig Aufwand eine intelligente Airbaganordnung geschaffen, die auf individuelle Gegebenheiten, insbesondere auf OOP-Gegebenheiten im Aufblasbereich eines Schutzairbags reagiert und dessen Aufbtasverhalten entsprechend günstig beeinflusst. Durch die voneinander getrennte Ausbildung der Airbags wird dabei ein einfach herstellbarer und wenig störanfälliger Aufbau der Airbaganordnung insgesamt erreicht, wobei zusätzlich auch die Sensorik einfach beherrschbar ist, da diese lediglich dem Tastairbag zuzuordnen ist. D. h., dass jedem Airbag hier einfach eine bestimmte Funktion und Aufgabe zugeordnet ist, was technisch wesentlich einfacher beherrschbar ist.

In einer konkreten, vorteilhaften Ausführungsform einer der vorstehenden Anordnungen wird vorgeschlagen, dass sich zuerst ein erster Airbag und/oder eine erste Airbagkammer etwa vertikal nach oben mit wenig Energie (low power) zum Wegdrücken der Hände entfaltet. Dies kann beispielsweise zum Wegdrücken der Hände von einem Lenkrad bei einem Fahrerairbag oder zum Wegdrücken der Hände von einer Schalttafel bei einem Beifahrerairbag verwendet werden. Anschließend ist dann der Tastairbag als. zweiter Airbag aufblasbar, wobei dessen Entfaltung durch möglicherweise aufliegende Hände nicht mehr behindert werden kann. Erst dann wird ggf. der Schutzairbag als dritter Airbag gefüllt.

Für eine gezielte, vorbestimmte Aufblasrichtung des Tastairbags oder für den o. g. ersten Airbag zum Wegdrücken der Hände kann eine, bis zu einer bestimmten Offenstellung aufdrückbare Airbagklappe in einer Führungsfunktion verwendet werden. Die Ausbildung eines Tastairbags während der Aufblasphase hinsichtlich der Geometrie und des Zeitablaufs kann vorteilhaft zudem an individuelle und fahrzeugspezifische Gegebenheiten durch die Anordnung und Gestalt von wenigstens einer Airbagklappe angepasst und abgestimmt werden.

Die Vorrichtung zur Tasterkennung des Tastairbags kann aus einer Geschwindigkeitsund/oder Beschleunigungsmessvorrichtung für die Ausbreitung des Tastairbags und/oder einer Kraftmessfolie in Verbindung mit einer nachgeschalteten Schwellwerteinrichtung bestehen. Beim Unterschreiten eines vorgegebenen Geschwindigkeits- und/oder Beschleunigungssollwerts und/oder eines Kraftmesswerts wird dann ein Steuersignal für die Steuereinrichtung als sensierter Positionsparameter abgegeben. Alternativ oder zudem kann die Vorrichtung zur Tasterkennung auch Schaltkontakte und/oder eine Kontaktfolie vorzugsweise im vorderen Bereich des Tastairbags aufweisen, wobei dann beim Auftreffen des Tastairbags auf ein Hindernis ein oder mehrere Schaltkontakte betätigbar sind.

Die verwendeten Airbags der Airbaganordnung können hinsichtlich der Befüllung voneinander entkoppelt sein und durch jeweils einen separaten, zugeordneten Gasgenerator befüllt werden. Es ist auch eine Anordnung mit wenigstens einem, durch die Steuereinrichtung steuerbaren Mehrstufengenerator möglich. Dabei wird zum Aufblasen des wenigstens einen Tastairbags eine erste Stufe und ggf. zum Aufblasen des Schutzairbags eine weitere Stufe gezündet. Beim Ansprechen der Vorrichtung zur Tasterkennung unter Abgabe eines Steuersignals wird die Zündung der weiteren Stufe für den wenigstens einen Schutzairbag durch die Steuerung unterdrückt oder ggf. die Befüllung reduziert.

Durch die Vorabsensierung von Innenraumparametern mittels eines Tastairbags können ggf. Zeitnachteile für den Befüllvorgang des Schutzairbags entstehen. Um solche möglichen Zeitnachteile auszugleichen wird vorgeschlagen, im Zusammenhang mit der Airbaganordnung an sich bekannte, früh ansprechende Aufprallsensoren (early crash sensoren) und/oder bereits vor einem relevanten Fahrzeugaufprall ansprechende Sensoren (pre crash sensoren) zu verwenden.

Anhand einer Zeichnung wird die Erfindung näher erläutert.

Es zeigen:
- Fig. 1: eine schematische Darstellung einer Sicherheitsvorrichtung mit einer Beifahrer-Airbaganordnung,
- Fig. 2: eine schematische Darstellung einer Sicherheitsvorrichtung mit einer Fahrer-Airbaganordnung,
- Fig. 3: eine schematische Darstellung einer Sicherheitsvorrichtung mit einer durch eine Klappe geführten Fahrer-Airbaganordnung, und
- Fig. 4: eine schematische Darstellung einer Sicherheitsvorrichtung mit einer durch eine Klappe geführten Beifahrer-Airbaganordnung.

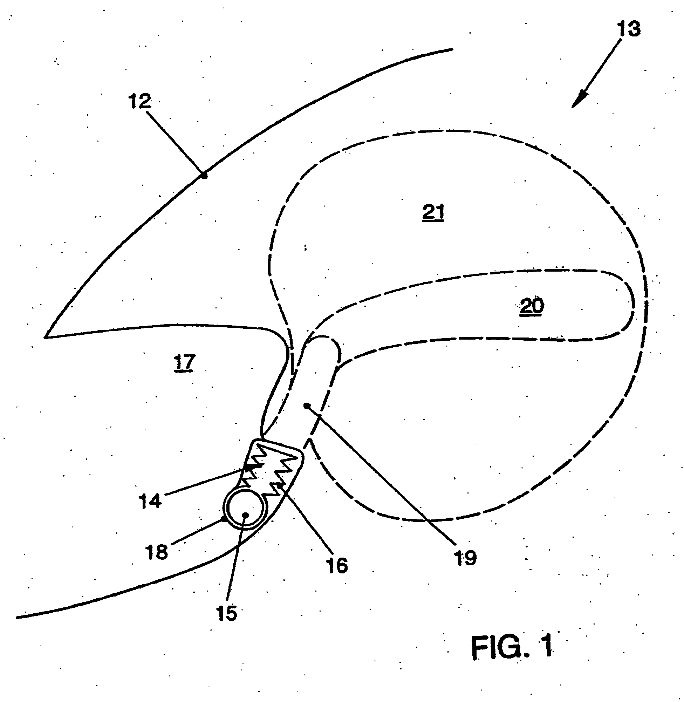

In der Fig. 1 ist eine Ausführungsform einer Sicherheitsvorrichtung 13 dargestellt. Ein Airbagmodul 14, bestehend aus einem Gasgenerator 15 und einer Airbaganordnung 16, ist hier in einem unteren, vorspringenden Bereich einer unter einer Windschutzscheibe 12 angeordneten Konsole 17 in einem Modulgehäuse 18 angeordnet. Die Airbaganordnung 16 umfasst einen ersten Airbag 19, einen zweiten Airbag 20 als Tastairbag sowie einen dritten Airbag als Schutzairbag 21.

Im Crashfall entfaltet sich, wie dies in der Fig. 1 schematisch dargestellt ist, zuerst der erste Airbag 19 in etwa in eine Vertikalrichtung nach oben mit wenig Energie (low power) zum Wegdrücken der Hände von der Konsole 17. Anschließend wird dann der Tastairbag 20 als zweiter Airbag zur Tasterkennung aufgeblasen, wobei dessen Entfaltung durch möglicherweise im Konsolenbereich aufliegende Hände nicht mehr behindert werden kann. Mit diesem Tastairbag 20 kann ein möglicherweise im Aufblasbereich vorhandener Insasse außerhalb einer Normalpositon (out of position; OOP) ertastet werden. Dazu sind in einem vorderen Bereich des aufgeblasenen Tastairbags hier nicht dargestellte Schaltkontakte angeordnet, die beim Auftreffen des Tastairbags auf den Insassen ihre Relativstellung ändern und ein Steuersignal zur Steuereinrichtung liefern. Erst dann wird der Schutzairbag 21 entsprechend dem Ergebnis der Tasterkennung gefüllt. Durch die Beaufschlagung der Steuereinrichtung mit dem Steuersignal aus der mittels dem Tastairbag 20 durchgeführten Tasterkennung eines Insassen außerhalb einer Normalposition wird die Aufblasfunktion des Schutzairbags 21 unterbunden oder wenigstens reduziert, so dass der Schutzairbag 21 ggf. nur noch mit weniger Energie weniger aggressiv für den Insassen aufgeblasen wird. Liegt kein solches Steuersignal der Tasterkennung vor, wird die zweite Generatorstufe gezündet und mit voller Energie zum vollständigen Aufblasen des Schutzairbags 21 freigegeben. Um Zeitnachteile für den Befüllvorgang des Schutzairbags 21 auszugleichen, können hier nicht dargestellte, früh ansprechende Early crash Sensoren und/oder Pre crash Sensoren verwendet werden.

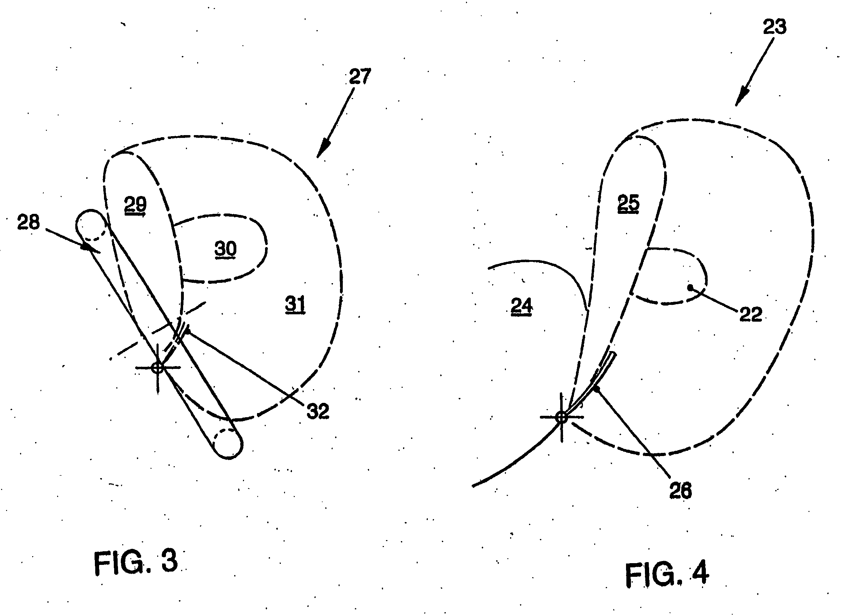

Wie dies aus der Fig. 4 ersichtlich ist, die eine dritte Ausführungsform einer Sicherheitsvorrichtung 23 an einer Beifahrerkonsole 24 zeigt, kann für eine gezielte, vorbestimmte Aufblasrichtung für einen ersten Airbag 25 zum Wegdrücken der Hände eine bis zu einer bestimmten Offenstellung aufdrückbare Airbagklappe 26 in einer Führungsfunktion verwendet werden. Nach dem Wegdrücken der Hände wird dann ein Tastairbag 22 zur Tasterkennung in oben beschriebener Weise aufgeblasen.

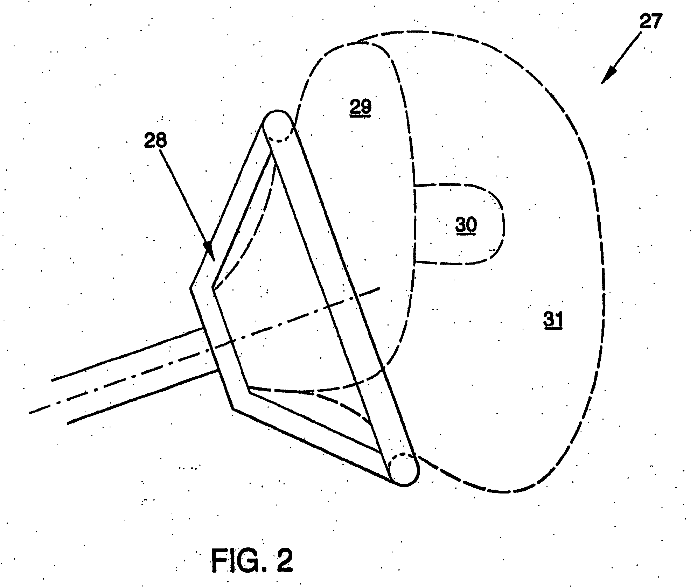

In der Fig. 2 ist eine Ausführung einer Sicherheitsvorrichtung 27 für einen Fahrzeuglenker dargestellt. Diese Sicherheitsvorrichtung 27 ist in einem Lenkradbereich 28 ausgebildet. Ein in der Darstellung der Fig. 2 nicht dargestellter Gasgenerator befüllt einen ersten Airbag 29 zum Wegdrücken der Hände von dem Lenkrad. Anschließend wird ein Tastairbag 30 aufgeblasen, der ertastet, ob sich der Fahrzeuglenker außerhalb einer Normalposition befindet. In Abhängigkeit von der ertasteten Position des Fahrzeuglenkers wird in der zuvor beschriebenen Weise der Schutzairbag 31 entweder mit voller Energie aufgeblasen oder die Befüllung des Schutzairbags 31 in Abhängigkeit von dem zur Steuereinrichtung gelieferten Steuersignal unterbunden oder zumindest reduziert.

In der Fig. 3 ist die Airbaganordnung der Fig. 2 in Verbindung mit einer Abdeckklappe 32, mit der in der Fig. 4 beschrieben Funktion als Führungsklappe dargestellt.

## Patentansprüche

1. Sicherheitsvorrichtung mit einer Airbaganordnung für ein Kraftfahrzeug,
wobei die Airbaganordnung über wenigstens einen bei einem Fahrzeugaufprall aktivierbaren Gasgenerator aufblasbar ist,
wobei die Airbaganordnung eine Vorrichtung zur Tasterkennung aufweist zur Ertastung eines möglicherweise in einem Aufblasbereich vorhandenen Hindernisses, insbesondere zur Ertastung eines Insassen außerhalb einer Normalposition (out of position; OOP),
wobei die Vorrichtung zur Tasterkennung beim Auftreffen auf ein Hindernis ein Steuersignal abgibt, und
wobei dem wenigstens einen Gasgenerator eine Steuereinrichtung zur Steuerung und Beeinflussung der Airbaganordnung in Abhängigkeit von sensierten Positionsparametem zugeordnet ist, die mit der Vorrichtung zur Tasterkennung verbunden ist und die bei der Beaufschlagung mit einem Steuersignal der Vorrichtung zur Tasterkennung eine Aufblasfunktion des Gasgenerators für die Airbaganordnung unterbindet oder wenigstens reduziert und ohne Vorliegen eines Steuersignals der Vorrichtung zur Tasterkennung die Aufblasfunktion mit voller Energie (full power) freigibt,
**dadurch gekennzeichnet,**
**dass** die Airbaganordnung wenigstens einen Tastairbag (20; 22; 30) und wenigstens einen Schutzairbag (21; 31) umfasst, die voneinander getrennte Airbags sind, wobei der wenigstens eine, relativ kleinvolumige, fingerartig mit wenig Energie (low power) schnell aufblasbare Tastairbag (20; 22; 30) mit Tastfunktion in den Aufblasbereich wenigstens eines zugeordneten, großvolumigeren Schutzairbags (21; 31) mit Abstützfunktion aufblasbar und/oder bewegbar ist und dort ein möglicherweise in diesem Aufblasbereich vorhandenes Hindernis, insbesondere einen Insassen außerhalb einer Normalposition (out of position; OOP) ertastet,
**dass** mit dem Tastairbag (20; 22; 30) die Vorrichtung zur Tasterkennung verbunden ist, die beim Auftreffen des Tastairbags (20; 22; 30) auf ein Hindernis ein Steuersignal abgibt, und
**dass** dem wenigstens einen Gasgenerator (15) die Steuereinrichtung zur Steuerung und Beeinflussung des Schutzairbags (21; 31) in Abhängigkeit von sensierten Positionsparametern zugeordnet ist, die bei der Beaufschlagung mit einem Steuersignal der Vorrichtung zur Tasterkennung eine Aufblasfunktion des Gasgenerators (15) für den dem Tastairbag (20; 22; 30) zugeordneten wenigstens einen Schutzairbag (21; 31) unterbindet oder wenigstens reduziert und ohne Vorliegen eines Steuersignals der Vorrichtung zur Tasterkennung die Aufblasfunktion mit voller Energie (full power) für den wenigstens einen Schutzairbag (21; 31) freigibt.

2. Sicherheitsvorrichtung nach Anspruch 1, **dadurch gekennzeichnet, dass** sich zuerst ein erster Airbag (19; 25; 29) und/oder eine erste Airbagkammer etwa vertikal nach oben mit wenig Energie (low power) zum Wegdrücken der Hände entfaltet und anschließend der Tastairbag (20; 22; 30) als zweiter Airbag und gegebenenfalls der Schutzairbag (21; 31) als dritter Airbag aufblasbar ist.

3. Sicherheitsvorrichtung nach Anspruch 2, **dadurch gekennzeichnet, dass** eine Airbagklappe (26; 32) in einer Airbagaustrittwand bis zu einer bestimmten Offenstellung aufdrückbar ist und in dieser Offenstellung als Führung für den ersten Airbag (25; 29) und/oder den Tastairbag (22; 30) dient.

4. Sicherheitsvorrichtung nach einem der Ansprüche 1 bis 3, **dadurch gekennzeichnet, dass** wenigstens ein Tastairbag (30) aus einem Lenkradbereich (28) für wenigstens einen zugeordneten Fahrer-Schutzairbag (31) und/oder wenigstens ein Tastairbag (20) aus einem Schalttafelbereich (17) für einen zugeordneten Beifahrer-Schutzairbag (21) aufblasbar ist.

5. Sicherheitsvorrichtung nach einem der Ansprüche 1 bis 4, **dadurch gekennzeichnet, dass** die Vorrichtung zur Tasterkennung beim Auftreffen des Tastairbags (20; 22; 30) auf ein nicht in Normalposition befindliches Hindernis aus einer Geschwindigkeits- und/oder Beschleunigungsmessvorrichtung für die Ausbreitung des Tastairbags (20; 22; 30) und/oder einer Kraftmessfolie in Verbindung mit einer nachgeschalteten Schwellwerteinrichtung besteht, wobei die Schwellwerteinrichtung beim Unterschreiten eines vorgegebenen Geschwindigkeits- und/oder Beschleunigungssollwerts und/oder eines Kraftmesswerts das Steuersignal für die Steuereinrichtung abgibt.

6. Sicherheitsvorrichtung nach einem der Ansprüche 1 bis 5, **dadurch gekennzeichnet, dass** die Vorrichtung zur Tasterkennung aus Schattkontakten und/oder einer Kontaktfolie besteht, die beim Auftreffen des Tastairbags (20; 22; 30) auf ein Hindernis ihre Relativstellung ändern und als Steuersignal einen Schaltkreis öffnen oder bevorzugt schließen.

7. Sicherheitsvorrichtung nach einem der Ansprüche 1 bis 6, **dadurch gekennzeichnet,**
**dass** der Gasgenerator (15) ein durch die Steuereinrichtung steuerbarer Mehrstufengenerator zur Befüllung des wenigstens einen Tastairbags (20; 22; 30) und des wenigstens einen Schutzairbags (21; 31) ist,
**dass** zum Aufblasen des Tastairbags (20; 22; 30) eine erste Stufe gezündet wird, und
**dass** beim Ansprechen der Vorrichtung zur Tasterkennung unter Abgabe eines Steuersignals die Zündung weiterer Stufen für wenigstens einen Schutzairbag (21; 31) durch die Steuereinrichtung unterbleibt oder die Befüllung reduziert wird.

8. Sicherheitsvorrichtung nach einem der Ansprüche 1 bis 7, **dadurch gekennzeichnet, dass** ein für eine Aktivierung der Airbaganordnung relevanter Fahrzeugaufprall durch früh ansprechende Sensoren (early crash sensors) und/oder durch bereits vor einem Aufprall ansprechende Sensoren (pre crash sensors) sensierbar ist.

## Claims

1. Safety device with an airbag arrangement for a motor vehicle, the airbag arrangement being inflatable by at least one gas generator activatable in the event of a vehicle collision, the airbag arrangement having a device for touch-contact detection for sensing an obstacle possibly present in an inflation region, in particular for sensing an occupant outside a normal position (out of position; OOP), to the device for touch-contact detection emitting a control signal when it impinges onto an obstacle, and at least one gas generator being assigned a control means for controlling and influencing the airbag arrangement as a function of sensed position parameters, which control means is connected to the device for touch-contact detection and, when acted upon by a control signal from the device for touch-contact detection, prevents or at least reduces an inflation function of a gas generator for the airbag arrangement and, in the absence of a control signal from the device for touch-contact detection, releases the inflation function with full power, **characterized in that** the airbag arrangement comprises at least one touch-contact airbag (20; 22; 30) and at least one protective airbag (21; 31) which are airbags separate from one another, the at least one relatively small-volume touch-contact airbag (20; 22; 30) with touch-contact functions, rapidly inflatable in a finger-like manner with low power, being inflatable and/or moveable into the inflation region of at least one assigned larger-volume protective airbag (21; 31) with support function and there sensing an obstacle possibly present in this inflation region, in particular an occupant outside a normal position (out of position: OOP), **in that** the touch-contact airbag (20; 22; 30) has connected to it the device for touch-contact detection which emits a control signal when the touch-contact airbag (20; 22; 30) impinges onto an obstacle, and **in that** the at least one gas generator (15) is assigned the control means for controlling and influencing the protective airbag (21; 31) as a function of the sensed position parameters, which control means, when acted upon by a control signal from the device for touch-contact detection, prevents or at least reduces an inflation function of the gas generator (15) for the at least one protective airbag (21; 31) assigned to the touch-contact airbag (20; 22; 30) and, in the absence of a control signal from the device for touch-contact detection, releases the inflation function with full power for the at least one protective airbag (21; 31).

2. Safety device according to Claim 1, **characterized in that**, first, a first airbag (19; 25; 29) and/or a first airbag chamber are/is deployed approximately vertically upwards with low power in order to push away the hands, and, subsequently, the touch-contact airbag (20; 22; 30) can be inflated as the second airbag and, if appropriate, the protective airbag (21; 31) can be inflated as a third airbag.

3. Safety device according to Claim 2, **characterized in that** an airbag flap (26; 32) in an airbag exit wall can be pushed open up to a defined opening position and, in this open position, serves as a guide for the first airbag (25; 29) and/or the touch-contact airbag (22; 30).

4. Safety device according to one of Claims 1 to 3, **characterized in that** at least one touch-contact airbag (30) can be inflated out of the steering-wheel region (28) for at least one assigned driver's protective airbag (31) and/or at least one touch-contact airbag (20) can be inflated out of a dashboard region (17) for an assigned front-seat passenger's protective airbag (21).

5. Safety device according to one of Claims 1 to 4, **characterized in that** the device for touch-contact detection when the touch-contact airbag (20; 22; 30) impinges onto an obstacle not located in the normal position consists of a speed-measuring and/or acceleration-measuring device for the expansion of the touch-contact airbag (20; 22; 30) and/or of a force-measuring film in conjunction with a following threshold-value means, the threshold-value means emitting the control signal for the control means in the event of the undershooting of a predetermined speed and/or acceleration desired value and/or of a force measurement value.

6. Safety device according to one of Claims 1 to 5, **characterized in that** the device for touch-contact detection consists of switching contacts and/or of a contact film which, when the touch-contact airbag (20; 22; 30) impinges onto an obstacle, change their relative position and, as a control signal, open or preferably close a circuit.

7. Safety device according to one of Claims 1 to 6, **characterized in that** the gas generator (15) is a multi-stage generator, controllable by the control means, for filling the at least one touch-contact airbag (20; 22; 30) and the at least one protective airbag (21; 31), **in that**, to inflate the touch-contact airbag (20; 22; 30), a first stage is ignited, and **in that**, when the device for touch-contact detection responds with the emission of a control signal, the ignition of further stages for at least one protective airbag (21; 31) by the control means ceases or filling is reduced.

8. Safety device according to one of Claims 1 to 7, **characterized in that** a vehicle collision relevant for an activation of the airbag arrangement can be sensed by early-responding sensors (early crash sensors) and/or by sensors responding even before a collision (pre-crash sensors).

## Revendications

1. Dispositif de sécurité comprenant un ensemble d'airbags pour un véhicule automobile,
dans lequel l'ensemble d'airbags peut être gonflé par au moins un générateur de gaz actionnable dans le cas d'une collision du véhicule,
dans lequel l'ensemble d'airbags présente un dispositif de détection de contact pour détecter par palpage un obstacle existant éventuellement dans une région de gonflage, notamment pour détecter par palpage un occupant en dehors d'une position normale (out of position ; OOP),
dans lequel le dispositif de détection de contact fournit un signal de commande lorsqu'il vient frapper un obstacle, et
dans lequel on associe à l'au moins un générateur de gaz un dispositif de commande pour commander et influencer l'ensemble d'airbags en fonction de paramètres de position détectés, lequel est connecté au dispositif de détection de contact et interrompt ou au moins réduit, dans le cas de la sollicitation avec un signal de commande du dispositif de détection de contact, une fonction de gonflage du générateur de gaz pour l'ensemble d'airbags et, en l'absence d'un signal de commande du dispositif de détection de contact, déclenche la fonction de gonflage à pleine puissance (full power),
**caractérisé en ce que**
l'ensemble d'airbags comprend au moins un airbag de palpage (20 ; 22 ; 30) et au moins un airbag de protection (21 ; 31), qui sont des airbags séparés l'un de l'autre, l'au moins un airbag de palpage (20 ; 22 ; 30) de relativement petit volume, en forme de doigt, pouvant être gonflé rapidement avec peu d'énergie (low power) avec une fonction de palpage dans la région de gonflage d'au moins un airbag de protection associé (21 ; 31) de plus grand volume avec fonction de support pouvant être gonflé et/ou déplacé et détectant par palpage un obstacle éventuellement présent dans cette région de gonflage, notamment un occupant en dehors d'une position normale (out of position ; OOP),
**en ce que** le dispositif de détection de contact est connecté à l'airbag de palpage (20 ; 22 ; 30), et délivre un signal de commande lorsque l'airbag de palpage (20 ; 22 ; 30) vient frapper un obstacle et
**en ce que** l'on associe à au moins un générateur de gaz (15) le dispositif de commande pour commander et influencer l'airbag de protection (21 ; 31) en fonction de paramètres de position détectés, qui, dans le cas de la sollicitation avec un signal de commande du dispositif de détection de contact, interrompt ou au moins réduit une fonction de gonflage du générateur de gaz (15) pour l'au moins un airbag de protection (21 ; 31) associé à l'airbag de palpage (20 ; 22 ; 30), et, en l'absence d'un signal de commande du dispositif de détection de contact, déclenche la fonction de gonflage à pleine puissance (full power) pour l'au moins un airbag de protection (21 ; 31).

2. Dispositif de sécurité selon la revendication 1,
**caractérisé en ce que** d'abord un premier airbag (19 ; 25 ; 29) et/ou une première chambre d'airbag se déploie approximativement verticalement vers le haut avec peu de puissance (low power) pour repousser les mains et ensuite l'airbag de palpage (20 ; 22 ; 30) peut être gonflé en tant que deuxième airbag et éventuellement l'airbag de protection (21 ; 31) peut être gonflé en tant que troisième airbag.

3. Dispositif de sécurité selon la revendication 2,
**caractérisé en ce qu'**un volet d'airbag (26 ; 32) peut être pressé dans une paroi de sortie d'airbag jusqu'à une position d'ouverture déterminée et sert dans cette position d'ouverture de guidage pour le premier airbag (25 ; 29) et/ou l'airbag de palpage (22 ; 30).

4. Dispositif de sécurité selon l'une quelconque des revendications 1 à 3, **caractérisé en ce qu'**au moins un airbag de palpage (30) peut être gonflé depuis une région du volant de direction (28) pour au moins un airbag de protection du conducteur associé (31) et/ou au moins un airbag de palpage (20) peut être gonflé depuis une région du tableau de bord (17) pour un airbag de protection de passager associé (21).

5. Dispositif de sécurité selon l'une quelconque des revendications 1 à 4, **caractérisé en ce que** le dispositif de détection de contact lorsque l'airbag de palpage (20 ; 22 ; 30) vient frapper un obstacle ne se trouvant pas dans une position normale se compose d'un dispositif de mesure de vitesse et/ou d'accélération pour le déploiement de l'airbag de palpage (20 ; 22 ; 30) et/ou d'une feuille de mesure de force en liaison avec un dispositif de valeur de seuil monté après, le dispositif de valeur de seuil délivrant le signal de commande pour le dispositif de commande dans le cas d'un dépassement par le bas d'une valeur de consigne de vitesse et/ou d'accélération donnée et/ou d'une valeur de mesure de force.

6. Dispositif de sécurité selon l'une quelconque des revendications 1 à 5, **caractérisé en ce que** le dispositif de détection de contact se compose de contacts de commutation et/ou d'une feuille de contact qui, lorsque l'airbag de palpage (20 ; 22 ; 30) vient frapper un obstacle, modifient leur position relative et ouvrent ou de préférence ferment, en tant que signal de commande, un circuit de commutation.

7. Dispositif de sécurité selon l'une quelconque des revendications 1 à 6, **caractérisé en ce que** le générateur de gaz (15) est un générateur à plusieurs étages pouvant être commandé par le dispositif de commande pour remplir l'au moins un airbag de palpage (20 ; 22 ; 30) et l'au moins un airbag de protection (21 ; 31),
**en ce que** pour le gonflage de l'airbag de palpage (20 ; 22 ; 30) un premier étage est allumé, et **en ce qu'**à la réaction du dispositif de détection de contact, en délivrant un signal de commande, l'allumage d'autres étages pour au moins un airbag de protection (21 ; 31) est supprimé par le dispositif de commande ou le remplissage est réduit.

8. Dispositif de sécurité selon l'une quelconque des revendications 1 à 7, **caractérisé en ce qu'**une collision du véhicule justifiant une activation de l'ensemble d'airbags peut être détectée par des capteurs à réaction rapide (early crash sensors) et/ou par des capteurs réagissant déjà avant une collision (pre crash sensors).
